# EUROPÄISCHE PATENTANMELDUNG

(11) **EP 4 485 497 A1**
(43) Veröffentlichungstag der Anmeldung: **01.01.2025**
(21) Anmeldenummer: 24180192.7
(22) Anmeldetag: 05.06.2024
(51) Int. Cl.: H01H 83/08, H02H 3/18, H01H 73/48

(54) **SCHUTZSCHALTER**

(30) Priorität: 29.06.2023 DE 102023206162
(71) Anmelder: Ellenberger & Poensgen GmbH, 90518 Altdorf (DE)
(72) Erfinder: Hiereth, Fabian, 92283 Lauterhofen (DE); HOFMANN, Christian, 90459 Nürnberg (DE); HOFMEISTER, Lothar, 92318 Neumarkt (DE); JUFEROW, Vitali, 67146 Deidesheim (DE); KAISER, Julian, 91058 Erlangen (DE); KÖPF, Hendrik-Christian, 90480 Nürnberg (DE)
(74) Vertreter: FDST Patentanwälte

(57) **Zusammenfassung**

Die Erfindung betrifft einen Schutzschalter (10) mit einem Schalter (12), der in Abhängigkeit einer Auslösekennlinie betätigt ist. Die Auslösekennlinie ist abhängig von einer Richtung eines geführten elektrischen Stroms. Ferner betrifft die Erfindung eine Verwendung eines Schutzschalters (10).

## Beschreibung

Die Erfindung betrifft einen Schutzschalter sowie die Verwendung eines Schutzschalters.

Industrieanlagen weisen üblicherweise mehrere Aktoren auf, mittels derer eine Erstellung und/oder Bearbeitung von Werkstücken erfolgt. Die Aktoren selbst umfassen meist einen Elektromotor, der mittels eines Umrichters bestromt wird. Zumindest werden die Aktoren meist mittels eines elektrischen Stroms betrieben. Zur vereinfachten Verschaltung sind die einzelnen Aktoren, insbesondere die Umrichter, zueinander parallel geschaltet und mittels eines gemeinsamen Gleichspannungszwischenkreises gespeist, sodass ein Gleichstromkreis gebildet ist. Üblicherweise wird mittels des Gleichspannungszwischenkreises eine Gleichspannung zwischen 400 V und 650 V geführt, und dieser wird mittels einer Gleichspannungsquelle gespeist, beispielsweise einem Gleichrichter, der an ein Versorgungsnetz angeschlossen ist.

Da die Aktoren unterschiedlich betätigt werden, ist dabei die dem Gleichspannungszwischenkreis entnommene Energiemengen zeitlich variabel, was zu Schwankungen in der an dem Gleichspannungszwischenkreises anliegenden elektrischen Spannung führt. Damit der Betrieb des jeweiligen Aktors davon nicht beeinflusst wird, weist jeder Umrichter meist einen Energiespeicher in Form eines Kondensators auf, mittels dessen eine Stabilisierung der jeweils verwendeten elektrischen Spannung erfolgt.

Damit im Fehlerfall eines Aktors, beispielsweise bei einem Kurzschluss des Elektromotors oder des Umrichters, eine weitere Beschädigung des jeweiligen Aktors oder der Umgebung, beispielsweise aufgrund eines entstehenden Brandes, unterbleibt, ist jeder Aktor üblicherweise mittels eines Schutzschalters mit dem Gleichspannungszwischenkreis elektrisch verbunden. Mittels des Schutzschalters wird dabei der zu dem jeweiligen Aktor geführte elektrische Strom überwacht, und falls dieser einen bestimmten Schwellwert überschreitet, wird ein Schalter des Schutzschalters betätigt, sodass der Stromfluss zu dem Aktor unterbrochen wird.

Bei einem Kurzschluss bei einem der Aktoren ist es dabei möglich, dass der zu diesem Aktor fließende elektrische Strom nicht lediglich von der Gleichspannungsquelle bereitgestellt wird, sondern dass auch ein Energiespeicher eines hierzu parallelgeschalteten Aktors geleert wird. Aufgrund der niederohmigen Verbindung bei dem defekten Aktor fließt somit von dem Energiespeicher des parallelgeschalteten Aktors ein vergleichsweise großer elektrischer Strom über den dem parallelgeschalteten Aktor zugeordneten Schutzschalter zurück in den Gleichspannungszwischenkreises und von dort zu dem defekten Aktor. Je nach verwendetem Schutzschalter ist es dabei möglich, dass aufgrund des erhöhten elektrischen Stroms der Schutzschalter betätigt wird, sodass der parallelgeschaltete Aktor von dem Gleichspannungszwischenkreis getrennt wird, obwohl dieser keine Fehlfunktion aufweist. Somit erfolgt ein nicht erforderlicher Ausfall dieses Aktors, weswegen Betriebskosten der Industrieanlage erhöht sind.

Der Erfindung liegt die Aufgabe zugrunde, einen besonders geeigneten Schutzschalter sowie eine besonders geeignete Verwendung eines Schutzschalters anzugeben, wobei vorteilhafterweise eine Anzahl von nicht erforderlichen Auslösungen verringert und/oder eine Betriebssicherheit erhöht ist.

Hinsichtlich des Schutzschalters wird diese Aufgabe durch die Merkmale des Anspruchs 1 und hinsichtlich der Verwendung durch die Merkmale des Anspruchs 8 erfindungsgemäß gelöst. Vorteilhafte Weiterbildungen und Ausgestaltungen sind Gegenstand der jeweiligen Unteransprüche.

Der Schutzschalter dient insbesondere der Absicherung eines Geräts, und der Schutzschalter ist beispielsweise ein Geräteschutzschalter. Alternativ oder in Kombination hierzu dient der Schutzschalter der Absicherung einer Leitung und ist somit ein Leitungsschutzschalter. Zumindest ist vorzugsweise der Schutzschalter geeignet, insbesondere vorgesehen und eingerichtet, in einen Stromkreis eingebracht zu werden und bei einem Fehlerfall einen Stromfluss über diesen zu unterbrechen.

Der Schutzschalter umfasst insbesondere zwei Anschlüsse, zwischen denen ein Strompfad gebildet ist. Der Schutzschalter weist einen Schalter auf, der zweckmä-βigennreise ein Bestandteil des Strompfads ist. Der Schalter weist zwei unterschiedliche Zustände auf, also insbesondere einen elektrisch leitenden (geschlossenen) und einen elektrisch nichtleitenden (geöffneten). Insbesondere wird mittels des Schalters, sofern der Schutzschalter sich in dem elektrisch leitenden Zustand befindet, der über den Schutzschalter geführte elektrische Strom geführt.

Beispielsweise ist der Schalter als ein Halbleiterschalter, insbesondere als Leistungshalbleiterschalter, ausgestaltet. Zum Beispiel ist der Schalter ein Feldeffekttransistor, wie ein MOSFET, GTO oder IGBT. Besonders bevorzugt jedoch ist der Schalter ein mechanischer Schalter und beispielsweise nach Art eines Relais oder eines Schützes ausgestaltet. Somit sind bei Betrieb auftretende elektrische Verluste reduziert.

Der Schalter ist in Abhängigkeit einer Auslösekennlinie betätigt. Vorzugsweise weist der Schutzschalter hierfür eine Verschaltung auf, die beispielsweise zumindest teilweise mittels elektrischer und/oder elektronischer Bauteile gebildet ist. Insbesondere umfasst die Verschaltung mehrerer diskreter Bauteile, anhand derer die Auslösekennlinie erstellt ist. Zusammenfassend ist zweckmäßigerweise der Schalter, insbesondere ein Steuereingang des etwaigen Halbleiterschalters und/oder eines Antriebs, sofern der Schalter mechanisch ausgestaltet ist, derart verschaltet, dass dieser in Abhängigkeit der Auslösekennlinie betätigt wird.

In der Auslösekennlinie sind dabei zweckmäßigerweise unterschiedliche Schwellwerte/Grenzwerte für Betriebsparameter angegeben, wobei bei einem Überschreiten dieser durch den jeweiligen Betriebsparameter der Schalter betätigt wird, geeigneterweise in den elektrisch nichtleitenden Zustand versetzt wird. Zum Beispiel gilt die Auslösekennlinie für mehrere Betriebsparameter, sodass es sich um ein Kennfeld handelt. Beispielsweise wird als Betriebsparameter eine anliegende elektrische Spannung herangezogen, die beispielsweise über den Schalter und/oder gegen Masse anfällt. Alternativ oder in Kombination hierzu werden als Betriebsparameter das Vorhandensein von bestimmten Artefakten in einem geführten elektrischen Strom und/oder der anliegenden elektrischen Spannung herangezogen. Besonders bevorzugt jedoch ist der Betriebsparameter der geführte elektrische Strom, wobei zweckmäßigerweise mittels der Auslösekennlinie unterschiedliche Grenzwerte für bestimmte Zeitspannen angegeben sind. Falls ein bestimmter Strom über den Schalter vorhanden ist und die zugeordnete Zeitspanne überschritten wird, wird insbesondere der Schalter betätigt. Zusammenfassend ist vorzugsweise mittels der Auslösekennlinie eine Höhe des elektrischen Stroms sowie eine Zeitspanne hinterlegt.

Die Auslösekennlinie, die auch lediglich als Kennlinie bezeichnet wird, ist abhängig von einer Richtung des geführten elektrischen Stroms. Mit anderen Worten wird der Schalter unterschiedlich betätigt, je nachdem, in welche Richtung der elektrische Strom über den Schutzschalter und somit auch über den Schalter geführt wird. Mit nochmals anderen Worten umfasst der Schutzschalter somit eine richtungsabhängige Auslösekennlinie. Insbesondere ist somit die Verschaltung des Schutzschalters derart, dass der Schalter abhängig von der Richtung des geführten Stroms entsprechend der jeweils gültigen Auslösekennlinie betätigt wird. Hierbei erfolgt beispielsweise bei einer der Richtungen überhaupt kein Auslösen des Schalters, unabhängig von dem jeweils realisierten Betriebsparameter. Somit kann in dieser Richtung der elektrische Strom im Wesentlichen ungestört geführt werden. Alternativ hierzu sind beispielsweise die Schwellwerte entsprechend angepasst. In einer weiteren Alternative beispielsweise für die beiden Richtungen jeweils unterschiedliche Betriebsparameter verwendet.

Aufgrund einer derartigen Ausgestaltung des Schutzschalters ist es somit möglich, mittels dessen gezielt auf einem Fehlerfall einer damit bestromten Last, wie einem Aktor, zu überwachen, insbesondere einen Kurzschluss bei dieser Last. Hierbei wird bei einem Kurzschluss der elektrische Strom über den Schutzschalter lediglich in eine der beiden Richtungen geführt. Falls der elektrische Strom in die entgegengesetzte Richtung auftritt, wird dieser somit nicht von einem Kurzschluss bei der Last hervorgerufen. Insbesondere wird in diesem Fall der Schalter nicht betätigt. Somit ist es möglich, für die jeweilige Last, die mittels des Schutzschalters abgesichert wird, die entsprechende Auslösekennlinie zu verwenden, sodass eine Überlastung oder Beschädigung der Last vermieden wird. In die entgegengesetzte Richtung wird eine andere Auslösekennlinie verwendet, mittels derer zweckmäßigerweise ein größerer elektrischer Stromfluss von der Last in ein die Last bestromendes Versorgungsnetz oder dergleichen ermöglicht ist, ohne dass ein Auslösen des Schutzschalters erfolgt. Somit ist der Aktor weiterhin betriebsfähig, zumal dieser keine Fehlfunktion aufweist. Zweckmäßigerweise ist diese Auslösekennlinie auf das etwaige Versorgungsnetz abgestimmt, sodass auch eine Beschädigung von diesem unterbleibt. Folglich ist eine Anzahl an nicht erforderlichen Auslösungen verringert. Da jedoch die Auslösekennlinie auf die Last und/oder das etwaige Versorgungsnetz separat anpassbar ist, ist dennoch eine Betriebssicherheit erhöht.

Insbesondere wird der Schutzschalter in einem Gleichstromkreis eingesetzt, also zum Beispiel zwischen einer Last und einem Gleichspannungszwischenkreis oder dergleichen. Hierbei ist insbesondere die Auslösekennlinie für einen Stromfluss von dem Gleichspannungszwischenkreis zu der Last auf die verwendete Last angepasst, sodass bei einem Fehlerfall der Last, wie dem Kurzschluss, der Stromfluss zu der Last unterbrochen wird. Bei einem entgegengesetzten Stromfluss hingegen ist insbesondere die Auslösekennlinie auf den Gleichspannungszwischenkreis oder sonstiger Bestandteile der jeweiligen Anlage, in der die Last verwendet wird, angepasst, sodass diese ebenfalls geschützt ist.

Vorzugsweise liegt hierbei im Gleichspannungszwischenkreis eine elektrische Gleichspannung zwischen 400 V und 650 V an, also insbesondere höherer Gleichspannung. Insbesondere wird der Schutzschalter zur Absicherung eines Aktors bei einer Industrieanlage verwendet. Der Aktor bildet hierbei insbesondere die Last. Aufgrund der verringerten Anzahl an nicht erforderlichen Auslösungen, also Betätigung des Schalters, nämlich dem Öffnen des Schalters, ist die Anzahl an Ausfällen reduziert, weswegen Betriebskosten verringert sind. Alternativ zur Anwendung bei einer Industrieanlage wird der Schutzschalter beispielsweise bei einem Elektrofahrzeug verwendet, wie einem Kraftfahrzeug, einem Flugzeug oder einem Schiff/Boot.

Bevorzugt ist der Schalter in Reihe mit einem Auslöser geschaltet. Hierbei ist insbesondere mittels des Auslösers der Schalter betätigt, und der Schalter und der Auslöser bilden zweckmäßigerweise zumindest teilweise, beispielsweise vollständig ein Schaltschloss, das zumindest teilweise mechanisch ausgestaltet ist. Somit ist eine Robustheit erhöht. Alternativ hierzu ist beispielsweise das Schaltschloss elektrohydraulisch ausgestaltet oder elektromechanisch. Mittels des Auslösers wird zum Beispiel ein Bestandteil des Schalters in einer Verklinkung gehalten, insbesondere entgegen einer ansonsten wirkenden Kraft, beispielsweise einer Federkraft. Alternativ oder in Kombination hierzu wird mittels des Auslösers bei Bedarf die Verklinkung betätigt, sodass die Kraft ungehindert auf den Schalter wirkt.

Der Auslöser ist mittels eines stromrichtungsabhängigen Bauteils überbrückt. Insbesondere ist das Stromrichtung abhängige Bauteil parallel zu dem Auslöser geschaltet. Das stromrichtungsabhängige Bauteil ist hierbei ein Bauteil, das, wenn über dieses ein elektrischer Strom geführt wird, je nach Stromrichtung ein unterschiedliches Verhalten aufweist. Mittels des stromrichtungsabhängigen Bauteils ist insbesondere die Abhängigkeit der Auslösekennlinie von Richtung des geführten elektrischen Stroms bereitgestellt, weswegen es insbesondere auch möglich ist, einen bereits bestehenden Schutzschalter entsprechend nachzurüsten. Zusammenfassend ist somit insbesondere aufgrund des stromrichtungsabhängigen Bauteils in Verbindung mit der Parallelschaltung zu dem Auslöser die stromrichtungsabhängige Auslösekennlinie bereitgestellt.

Beispielsweise ist der Auslöser eine Bimetallschnappscheibe oder ein Bimetallstreifen, mittels derer zumindest teilweise ein Bestandteil des Schalters gebildet ist. Hierbei wird mittels der Bimetallschnappscheibe/ Bimetallstreifen auch der über den Schalter geführte elektrische Strom geführt. Falls dieser vergleichsweise groß ist, erfolgt eine Erwärmung der Bimetallschnappscheibe/ des Bimetallstreifens, sodass sich diese verformt, weswegen diese nicht mehr an weiteren Bestandteilen des Schalters anliegt, sodass der Stromfluss unterbrochen wird. Alternativ hierzu wirkt die Bimetallschnappscheibe/ Bimetallstreifen auf weitere Bestandteile des Schalters, mittels derer der Stromfluss über den Schutzschalter unterbrochen werden kann. Besonders bevorzugt jedoch umfasst der Auslöser eine elektrische Auslösespule, die elektrisch in Reihe mit dem Schalter geschaltet ist. Mit anderen Worten ist der Auslöser somit ein magnetischer Auslöser. Der Auslöser ist zweckmäßigerweise derart angeordnet, dass das damit bei einem vergleichsweise hohen elektrischen Strom entstehende Magnetfeld eine Verlinkung löst, mittels derer der Schalter in einem geschlossenen Zustand gehalten wird. Insbesondere ist dabei die Auslösespule derart ausgestaltet, dass der Schalter geöffnet wird, wenn mittels des Schutzschalters das Dreifache des Nennstroms geführt wird. Dahingegen ist bei geringeren elektrischen Strömen die aufgebrachte Magnetkraft zu gering, um die Verlinkung zu lösen. Aufgrund des stromrichtungsabhängigen Bauteils wirkt dabei die Auslösespule vorwiegend bei einer Stromrichtung, wohingegen bei der anderen Stromrichtung eine Wirkung dieser verringert ist. Somit ist es möglich, den Schutzschalter zur Absicherung einer Last bei einem Kurzschluss in einem Gleichspannungskreis zu verwenden. Dahingegen wird in die entgegengesetzte Richtung, bei der ein übermäßiger Stromfluss nicht durch einen Kurzschluss der Last hervorgerufen wird, die Auslösespule zur Betätigung des Schalters in geringerem oder anderem Maße verwendet.

Beispielsweise ist der Schutzschalter oder zumindest der zwischen den etwaigen Anschlüssen gebildete Strompfad lediglich mittels des Schalters sowie des Auslösers gebildet. Zumindest jedoch umfasst beispielsweise das Schaltschloss lediglich den Schalter und den Auslöser. Somit sind Herstellungskosten reduziert und eine Robustheit erhöht. Besonders bevorzugt jedoch ist elektrisch in Reihe mit dem Schalter ein weiterer Auslöser geschaltet. Somit ist der weitere Auslöser auch elektrisch in Reihe mit dem Auslöser und zweckmäßigerweise im Montagezustand mit der abzusichernden Last geschaltet. Der weitere Auslöser ist nicht mittels des stromrichtungsabhängigen Bauteils überbrückt. Beispielsweise ist der weitere Auslöser mittels eines anderen stromrichtungsabhängigen Bauteils überbrückt, wobei sich die Abhängigkeit der beiden Bauteile von der Stromrichtung unterscheidet. Besonders bevorzugt jedoch ist der weitere Auslöser nicht mittels eines stromrichtungsabhängigen Bauteils überbrückt, sodass der weitere Auslöser unabhängig von der Stromrichtung arbeitet. Somit erfolgt mittels des weiteren Auslöser sowohl ein Schutz der etwaigen zu bestromenden Last als auch des etwaigen Versorgungsnetzwerks. Besonders bevorzugt weist der weitere Auslöser eine andere Auslösekennlinie als der Auslöser auf. Somit ist eine Funktionalität vergrößert. Vorzugsweise umfasst der Auslöser die elektrische Auslösespule, und der weitere Auslöser umfasst geeigneterweise eine Bimetallschnappscheibe/ Bimetallstreifen oder ist damit gebildet. Zumindest jedoch umfasst zweckmäßigerweise der weitere Auslöser ein Bimetallelement. Zumindest jedoch löste der weitere Auslöser insbesondere lediglich dann aus, wenn über einen längeren Zeitraum ein verringerter elektrischer Strom geführt wird, der jedoch insbesondere größer als der Nennstrom ist. Dahingegen löste der Auslöser bei einem erhöhten elektrischen Strom aus, auch wenn dieser lediglich für eine vergleichsweise kurze Zeitspanne vorherrscht. Aufgrund des weiteren Auslösers erfolgt somit insbesondere eine Absicherung bei Fehlerquellen, die keinem direkten Kurzschluss entsprechen, wohingegen der Auslöser der Absicherung gegen einen Kurzschluss dient. Dabei sind keine zwei unterschiedlichen Schutzschalter für erforderlich.

Beispielsweise umfasst das stromrichtungsabhängige Bauteil eine Suppressordiode oder eine Zener-Diode. Diese weisen, je nach Richtung des elektrischen Stroms, ein unterschiedliches Verhalten auf, sodass mittels dieser die richtungsabhängige Auslösekennlinie realisiert werden kann. Beispielsweise umfasst das stromrichtungsabhängige Bauteil mehrere derartige einzelne Bauteile, die geeignet miteinander verschaltet sind, zum Beispiel parallel und/oder in Reihe. Somit ist eine Flexibilität bei der Erstellung der Auslösekennlinie vergrößert. Besonders bevorzugt jedoch umfasst das stromrichtungsabhängige Bauteil eine Diode, mittels derer insbesondere ein Stromfluss lediglich in eine einzige Richtung ermöglicht ist. Beispielsweise umfasst das stromrichtungsabhängige Bauteil noch weitere elektrische und/oder elektronische Bauteile, die geeignet miteinander verschaltet sind. Besonders bevorzugt jedoch ist das stromrichtungsabhängige Bauteil mittels der Diode gebildet. Somit sind Herstellungskosten und ein Platzbedarf reduziert. Auch ist es auf diese Weise möglich, einen bereits bestehenden Schutzschalter vergleichsweise kostengünstig nachzurüsten. Aufgrund der Diode wird somit mittels des Auslösers dann geführt, wenn der Strom eine der beiden Richtungen aufweist, nämlich die entgegen der Durchlassrichtung der Diode. In die umgekehrte Richtung erfolgt der Stromfluss insbesondere über die Diode, zumindest wenn der Auslöser einen höheren Innenwiderstand als die Diode aufweist. In diesem Fall erfolgt somit keine Betätigung des Schalters mittels des Auslösers.

Alternativ oder in Kombination hierzu umfasst das stromrichtungsabhängige Bauteil einen Halbleiterschalter. Dieser weist im Vergleich zur Diode einen verringerten Innenwiderstand auf, wenn sich dieser in dem elektrisch leitenden Zustand befindet. Somit ist sichergestellt, dass auch bei einem vergleichsweise niederohmigen Auslöser der elektrische Strom über das stromrichtungsabhängige Bauteil fließt, wenn sich dieses in dem elektrisch leitenden Zustand befindet. Beispielsweise ist ein Messwiderstand vorhanden, mittels dessen die Stromrichtung bestimmt wird, wobei anhand der darüber anfallenden elektrischen Spannung der Halbleiterschalter betätigt wird. Besonders bevorzugt ist der Halbleiterschalter in Abhängigkeit einer über den Auslöser anfallenden elektrischen Spannung betätigt.

Vorzugsweise ist hierbei ein Komparator vorhanden, mittels dessen das Vorzeichen der elektrischen Spannung bestimmt wird. Der Komparator ist beispielsweise mittels einer Verschaltung eines Operationsverstärkers bereitgestellt. Insbesondere erfolgt hierbei eine Versorgung des Operationsverstärkers und/oder des Halbleiterschalters mittels einer externen Spannungsversorgung. Besonders bevorzugt jedoch werden diese bei Betrieb mittels des über den Schalter geführten elektrischen Stroms oder zumindest einer an den etwaigen Anschlüssen des Schutzschalters anliegende elektrische Spannung versorgt, wofür insbesondere Vorwiderstände, Schutzdioden und/oder Spannungsteiler vorhanden sind. Zweckmäßigerweise ist eine Verschaltung des Schutzschalters hierauf angepasst. Somit ist ein Einbau des Schutzschalters vereinfacht.

In einer weiteren Alternative umfasst der Schutzschalter einen Antrieb, der auf den Schalter wirkt. Hierbei wird bei einer Bestromung des Antriebs insbesondere eine Schaltstellung des Schalters verändert. Zweckmäßigerweise ist hierbei der Schalter ein mechanischer Schalter, wie ein Relais oder Schütz oder umfasst zumindest diese. Der Antrieb ist beispielsweise eine elektrische Spule, oder umfasst zumindest eine elektrische Spule, innerhalb derer ein Anker angeordnet ist, der auf den Schalter wirkt, insbesondere eine Kontaktbrücke. Alternativ hierzu wirkt der Antrieb beispielsweise auf eine Verklinkung, mittels derer der Schalter entgegen einer wirkenden Kraft in einer Schalterstellung gehalten ist. Zusammenfassend wirkt beispielsweise der Antrieb direkt auf den Schalter, insbesondere die etwaige Kontaktbrücke, oder dient zum Lösen einer mechanischen Verklinkung oder dient zunächst dem Lösen der mechanischen Verklinkung und wirkt anschließend auf die Kontaktbrücke.

Der Schutzschalter umfasst vorzugsweise eine Steuereinheit, mittels derer der Antrieb betätigt ist. Der Steuereinheit umfasst beispielsweise einen Mikrocontroller oder ist damit gebildet. Vorzugsweise umfasst die Steuereinheit mehrere diskrete elektrische Bauteile, mit dem Mikrocontroller geeignet verschaltet sind. Alternativ hierzu ist die Steuereinheit lediglich mittels diskreter Bauteile, insbesondere elektrischer Bauteile, gebildet. Vorzugsweise umfasst der Schutzschalter einen oder mehrere Sensoren zum Erfassen eines Betriebszustands des Schutzschalters, insbesondere des etwaigen Betriebsparameters. Geeigneterweise ist zumindest einer der Sensoren ein Stromsensor, mittels dessen der über den Schutzschalter geführte elektrische Strom gemessen oder in anderer Weise bestimmt werden kann. Alternativ oder in Kombination hierzu ist zumindest einer der Sensoren als ein Spannungssensor ausgestaltet, und mittels dessen ist es möglich, die über den Schalter anfallende Spannung elektrische Spannung, die über den etwaigen Stromsensor anfallende elektrische Spannung und/oder eine elektrische Spannung gegen Masse zu erfassen. In einer weiteren Alternative umfasst einer der Sensoren eine Reed-Relay und/oder einen thermischen Auslöser, wie ein BiMetall, NTC, PTC oder eine Schnappscheibe, einen magnetischen und/oder einen hydraulischen Auslöser. Der jeweilige Auslöser/Sensor wird insbesondere als Signalgeber für die Steuereinheit verwendet.

Der Antrieb ist beispielsweise mittels einer separaten Stromversorgung betrieben, mittels derer somit insbesondere eine Ansteuerspannung für den Antrieb bereitgestellt wird. Somit ist es möglich, den Schutzschalter auch bei unterschiedlichsten elektrischen Strömen/Spannungen zu verwenden, ohne dass eine Funktionsweise des Antriebs verändert ist. Wenn die separate/externe Stromversorgung verwendet wird, ist insbesondere ein Energiespeicher, wie ein Kondensator vorhanden, mittels dessen beispielsweise bei einem Abreißen einer Steuerleitung oder dergleichen dennoch ein sicheres Betätigen des Schalters für zumindest einen geringen Zeitraum ermöglicht ist. Auch erfolgt mittels des Kondensators insbesondere eine Stabilisierung der verwendeten elektrischen Ansteuerspannung. Beispielsweise wird hierbei der Kondensator/der Energiespeicher lediglich bis zur Höhe der Ansteuerspannung geladen. Alternativ hierzu sind Ladungspumpen, Spannungsvervielfacher oder sonstige Anordnungen vorhanden, mittels derer die elektrische Spannung erhöht werden kann. Somit ist es möglich, den Antrieb mit einer vergleichsweise hohen elektrischen Energie zu betätigen, was einen Schaltvorgang des Schalters verkürzt.

In einer Alternative ist der Antrieb zumindest teilweise mittels des über den Schutzschalter geführten elektrischen Stroms und/oder der daran, insbesondere am dem etwaigen Strompfad, anliegende elektrische Spannung bestromt. Somit ist ein Einbau des Schutzschalters erleichtert. Hierbei wird beispielsweise der Antrieb kontinuierlich bestromt, sofern mittels des Schutzschalters der elektrische Strom geführt wird. Insbesondere ist in diesem Fall der Schalter mit einer weiteren Kraft beaufschlagt, die mittels des Antriebs kompensiert wird. Alternativ hierzu erfolgt beispielsweise eine Bestromung des Antriebs, wenn ein Öffnen des Schalters erfolgen soll.

Der Antrieb umfasst beispielsweise einen sogenannten "Moving Magnet Aktuator". Der "Moving Magnet Aktuator" ("Moving Magnet Actuator") weist einen Permanentmagneten auf, der beweglich gelagert ist. Zum Beispiel ist der Permanentmagnet drehbeweglich gelagert oder besonders bevorzugt linear beweglich. Der Permanentmagnet ist zweckmäßigerweise an der etwaigen Kontaktbrücke angebunden oder zumindest in Wirkverbindung mit dem Schalter, sodass bei einer Bewegung des Permanentmagneten die Schaltstellung des Schalters verändert wird, wobei zweckmäßigerweise die Kontaktbrücke vorzugsweise bewegt wird. Zudem weist der "Moving Magnet Aktuator" eine Antriebseinheit mit einer oder mehreren elektrischen Spulen auf, die bei Betätigung des Antriebs bestromt werden, sodass zwischen diesen und dem Permanentmagneten eine magnetische Wechselwirkung erfolgt. Die elektrischen Spulen sind dabei ortsfest gehalten.

Da die elektrische(n) Spule(n) stationär gehalten ist/sind, ist eine Konstruktion vereinfacht, und es sind, mit Ausnahme der für die Lagerung erforderlichen Komponenten keine weiteren beweglichen Bauteile oder elektrischen Verbindungen zwischen den beweglichen Bauteilen, nämlich dem Permanentmagneten, und den stationären Bauteilen des "Moving Magnet Aktuators", der im Weiteren auch lediglich als Aktuator bezeichnet ist, erforderlich. Somit ist auch eine Reibung verringert. Da die Anzahl der beweglichen Bestandteile des "Moving Magnet Aktuators", insbesondere lediglich der Permanentmagnet, vergleichsweise gering ist, und diese insbesondere ein vergleichsweise geringes Gewicht aufweisen, ist eine Dynamik des Aktuators vergleichsweise hoch. Somit ist eine Trägheit beim Betätigen des Schalters verringert.

Beispielsweise ist der Aktuator rotatorisch ausgestaltet oder besonders bevorzugt linear. In diesem Fall weist die Antriebseinheit zwei konzentrisch auf einer Achse angeordnete elektrische Spulen auf, die entlang der Achse zueinander beabstandet sind, und zwischen denen der Permanentmagnet angeordnet ist, dessen beide Pole sich bezüglich der Achse gegenüberliegen, und der beweglich entlang der Achse gelagert ist. Die beiden elektrischen Spulen werden hierbei insbesondere gleichzeitig bestromt, und sind beispielsweise elektrisch in Reihe oder besonders bevorzugt elektrisch parallel zueinander geschaltet. Die Verschaltung der elektrischen Spulen ist hierbei derart, dass, wenn diese bestromt werden, mittels der elektrischen Spulen ein Magnetfeld erstellt wird, das mit dem Magnetfeld des Permanentmagneten derart wechselwirkt, dass dieser entlang der Achse zu einer der elektrischen Spulen gezogen und von der anderen weggedrückt wird. Folglich wirkt eine vergleichsweise große Kraft auf den Permanentmagneten, weswegen eine Dynamik weiter erhöht ist.

Besonders bevorzugt weist der Aktuator zudem ein (magnetisches) Kurzschlussblech oder dergleichen auf, mittels derer der Permanentmagnet in einer bestimmten Stellung gehalten wird, wenn keine Bestromung der elektrischen Spule(n) erfolgt. Zum Beispiel liegt in diesem Fall der Permanentmagnet an dem Kurzschlussblech an oder ist besonders bevorzugt zu diesem stets beabstandet. Das Kurzschlussblech ist zweckmäßigerweise aus einem ferromagnetischen Material erstellt, wie zum Beispiel Eisen, weswegen Herstellungskosten reduziert sind. Aufgrund des Kurzschlussblechs wird der Permanentmagnet in einer Stellung stabilisiert, insbesondere wenn der Schalter geschlossen ist. Folglich ist der mechanische Schalter zumindest monostabil oder bistabil ausgestaltet.

Zum Beispiel weist der Aktuator lediglich die einzige Antriebseinheit auf. Besonders bevorzugt weist jedoch der "Moving Magnet Aktuator" zwei Antriebseinheiten auf, wobei die eine davon insbesondere mittels der beiden elektrischen Spulen gebildet ist, oder diese zumindest umfasst, die miteinander elektrisch parallel oder in Reihe geschaltet sind. Geeigneterweise weist die andere Antriebseinheit ebenfalls zwei elektrische Spulen auf, die ebenfalls elektrisch parallel oder in Reihe geschaltet sind. Hierbei ist insbesondere jede der elektrischen Spulen der einen der Antriebseinheiten von jeweils einer der elektrischen Spulen der anderen Antriebseinheiten umgeben, und diese sind insbesondere jeweils zueinander konzentrisch angeordnet. Somit ist ein vergleichsweise kompakter "Moving Magnet Aktuator" bereitgestellt.

Mittels der beiden Antriebseinheiten ist es ermöglicht, eine vergleichsweise große Kraft auf den Permanentmagneten auszuüben, sodass dieser vergleichsweise stark beschleunigt wird. Infolgedessen ist auch eine Schaltzeit des Schalters beschleunigt, geeigneterweise im Fehlerfall. Jedoch ist es auch möglich, den mechanischen Schalter lediglich mit einer der Antriebseinheiten zu betätigen, sodass eine elektrische und auch mechanische Belastung sowie ein Energiebedarf verringert ist. Infolgedessen ist ein Einsatzbereich des Schutzschalters vergrößert, und dieser wird zum Beispiel auch beim Normalbetrieb zum Unterbrechen des elektrischen Stroms herangezogen, wobei lediglich eine der Antriebseinheiten bestromt wird. Im Fehlerfall hingegen werden beide Antriebseinheiten zum Betätigen des Schalters herangezogen. Somit ist eine Anzahl an benötigten Bauteilen verringert.

Die beiden Antriebseinheiten sind beispielsweise separat mittels der Steuereinheit bestrombar und hierfür geeignet verschaltet. Insbesondere ist es jedoch auch möglich, die beiden Antriebseinheiten gleichzeitig zu bestromen. In diesem Fall wird für den Betrieb des Antriebs insbesondere die separate Spannungsversorgung verwendet. Bei einer Alternative wird eine der Antriebseinheiten mittels des über den Schalter geführten elektrischen Stroms bestromt. Die Antriebseinheit ist hierbei elektrisch in Reihe mit dem Schalter geschaltet. Dabei ist der Nennstrom insbesondere nicht ausreichend, um ein Magnetfeld zu erstellen, das den Permanentmagneten bewegt. Falls hingegen der elektrische Strom, der über den Schalter geführt wird, weiter ansteigt, ist auch die Stärke des Magnetfelds vergrößert, und dieses reicht dann aus, um den Permanentmagneten zu bewegen. Die andere Antriebseinheit wird insbesondere mittels der separate Spannungsversorgung bestromt oder ist mittels dieser bestrombar. Somit ist auch ein Unterbrechen des Stromflusses unabhängig von einem Überstrom oder Kurzschlussstrom möglich. Bei einer weiteren Alternative ist parallel zu dieser Antriebseinheit ein Element mit einem definierten, zum Beispiel konstanten oder gesteuertem/geregeltem Widerstand geschaltet. Insbesondere ist das Element derart ausgebildet, dass bei einem Nennstrom dessen Widerstand geringer als der mittels der Antriebseinheit bereitgestellte Widerstand ist. Somit fließt in diesem Fall der elektrische Strom vorwiegend über das Element. Falls hingegen der Überstrom/Kurzschlussstrom vorhanden ist, ist der Widerstand der Auslöseeinheit geringer, sodass der elektrische Strom über diese fließt. Folglich wird das Magnetfeld erstellt, das zu einer Bewegung des Permanentmagneten führt.

Ein Schutzschalter mit einem Schalter, der in Abhängigkeit einer Auslösekennlinie betätigt ist, wobei die Auslösekennlinie abhängig von einer Richtung des geführten elektrischen Stroms ist, wird zur Absicherung einer Last in einem Gleichstromkreis verwendet. Dabei wird über den Schutzschalter im Normalbetrieb der elektrische Strom vorzugsweise lediglich in eine der beiden Richtungen geführt. Diese entspricht insbesondere einer Richtung des elektrischen Stroms beim Kurzschluss der Last. Zweckmäßigerweise umfasst der Gleichstromkreis mehrere derartige Lasten, die insbesondere elektrisch parallel zueinander geschaltet und gegen einen Gleichspannungszwischenkreis des Gleichspannungskreises geführt sind. Aufgrund der Schutzschalter wird somit vermieden, dass bei einem Kurzschluss einer der Lasten, die Schutzschalter, die den anderen Lasten zugeordnet sind, betätigt werden. Insbesondere betrifft die Erfindung auch einen derartigen Gleichstromkreis, der insbesondere ein Bestandteil einer Industrieanlage ist. In diesem Fall bildet die Last oder einige der Lasten einen Aktor, mittels dessen beispielsweise eine Bearbeitung und/oder Erstellung eines Werkstücks erfolgt.

Die im Zusammenhang mit dem Schutzschalter erläuterten Weiterbildungen und Vorteile sind sinngemäß auch auf die Verwendung / den Gleichstromkreis sowie untereinander zu übertragen und umgekehrt.

Nachfolgend werden Ausführungsbeispiele der Erfindung anhand einer Zeichnung näher erläutert. Darin zeigen:
- Fig. 1: schematisch einen Gleichstromkreis mit zwei Lasten, denen jeweils ein Schutzschalter zugeordnet ist,
- Fig. 2 - 4: schematisch vereinfacht einen Schaltplan jeweils einer Ausgestaltungsform des Schutzschalters,
- Fig. 5: in einer Schnittdarstellung ausschnittsweise einen Antrieb eines der Schutzschalter, und
- Fig. 6, 7: schematisch vereinfacht einen Schaltplan jeweils weiterer Ausgestaltungsformen des Schutzschalters.

Einander entsprechende Teile sind in allen Figuren mit den gleichen Bezugszeichen versehen.

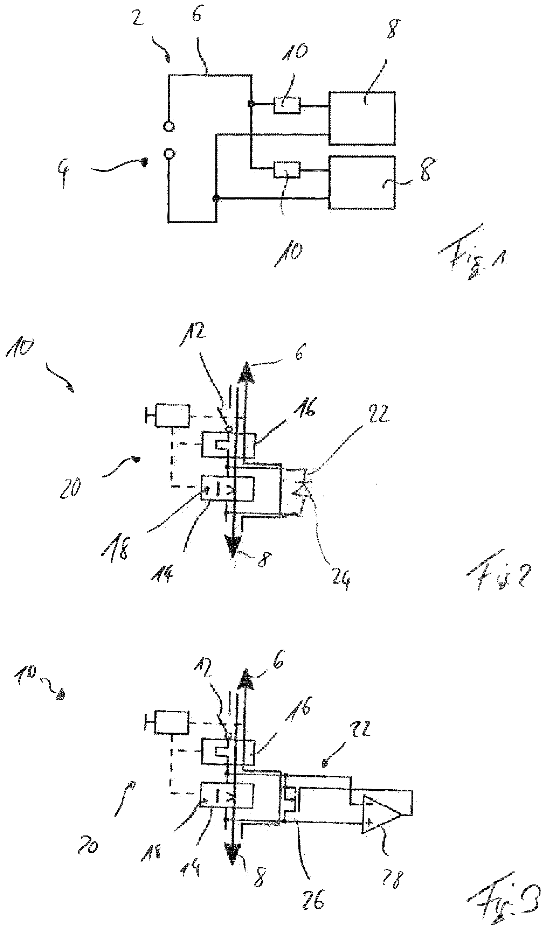

In Figur 1 ist schematisch vereinfacht ein Gleichstromkreis 2 dargestellt, der eine Gleichspannungsquelle 4 umfasst. Mittels dieser wird eine elektrische Gleichspannung von 650 V bereitgestellt, und mittels dieser ist ein Gleichspannungszwischenkreis 6 gespeist. Mittels dessen werden zwei Lasten 8 versorgt, die zueinander parallel geschaltet und gegen den Gleichspannungszwischenkreis 6 über jeweils einen Schutzschalter 10 geführt sind, die zueinander baugleich sind.

In Figur 2 ist ein schematisch vereinfachter Schaltplan des Schutzschalters 10 dargestellt. Der Schutzschalter 10 weist einen Schalter 12 auf, Der als mechanischer Schalter ausgestaltet ist. Der Schalter 12 ist elektrisch in Reihe mit einem Auslöser 14 sowie einem weiteren Auslöser 16 geschaltet. Diese Reihenschaltung ist ein Bestandteil eines Strompfads, der zwischen zwei nicht näher dargestellte Anschlüsse des Schutzschalters 10 geschaltet ist, von denen einer dem Gleichstromzwischenkreis 6 und der andere der Last 8 zugeordnet ist.

Der weitere Auslöser 16 ist als eine Bimetallschnappscheibe ausgestaltet, die, je nach Temperatur, zwei unterschiedliche Formen aufweist. Bei einer Normaltemperatur der Bimetallschnappscheibe ist mittels dieser eine Verklinkung des Schalters 12 gehalten, sodass dieser in einem bestimmten Schaltzustand, nämlich dem geschlossenen Zustand gehalten wird. Der Schalter 12 ist hierbei mittels einer weiteren Kraft, wie einer Federkraft, belastet, die derart ausgestaltet ist, dass bei einem Lösen der Verklinkung der Schalter 12 in den geöffneten Zustand übergeht.

Der Auslöser 14 ist ein magnetischer Auslöser und weist eine Auslösespule 18 auf. Diese ist mittels des über den Schalter 12 geführten elektrischen Stroms durchflossen, und in dieser ist nicht näher dargestellter Anker angeordnet, der ebenfalls auf die Verklinkung des Schalters 12 wirkt. Der Auslöser 14, der weitere Auslöser 16 sowie der Schalter 12 sind zu einer gemeinsamen Einheit, nämlich einem Schaltschloss 20, zusammengefasst, das elektromechanisch ausgestaltet ist, wobei der Schutzschalter 10 ein thermischer/magnetischer Schutzschalter ist. Elektrisch parallel zu dem Auslöser 14 ist ein stromrichtungsabhängiges Bauteil 22 geschaltet, mittels dessen somit der Auslöser 14 überbrückt ist. Das stromrichtungsabhängige Bauteil 22 weist, je nach Richtung des über den parallelgeschalteten Auslöser 14 geführten elektrischen Stroms, ein unterschiedliches Verhalten auf. Das stromrichtungsabhängige Bauteil 22 ist in diesem Fall eine Diode 24. Die Durchlassrichtung der Diode 24 ist hierbei entgegengesetzt der gewünschten Bestromungsrichtung der Last 8, sodass bei einem Normalbetrieb der von der Spannungsquelle 4 bereitgestellte elektrische Strom über den Auslöser 14 zu der jeweiligen Last 8 geführt wird. Lediglich ein Rückstrom von der Last 8 zurück in den Gleichspannungszwischenkreis 6 wird über die Diode 24 geführt.

In einem Normalbetrieb, also wenn die Last 8 in gewünschter Art und Weise bestromt wird, fließt der elektrische Strom von dem Gleichspannungszwischenkreis 6 über den geschlossenen Schalter 12, den weiteren Auslöser 16 sowie den Auslöser 14 zu der Last 8. Sofern hierbei der elektrische Strom den Nennstrom nicht in nennenswertem Maß überschreitet, wird die Bimetallschnappscheibe des weiteren Auslösers 16 nicht übermäßig erwärmt, sodass keine Verformung dieser erfolgt. Auch ist das mittels der Auslösespule 18 des Auslösers 14 bereitgestellte Magnetfeld nicht ausreichend, um die Verklinkung des Schalters 12 zu lösen, sodass über den Schutzschalter 10 im Wesentlichen ungestört die Bestromung der Last 8 erfolgen kann.

Falls der elektrische Strom einen bestimmten Grenzwert überschreitet, wie beispielsweise des Zweifachen des Nennstroms, ist das mittels der Auslösespule 18 bereitgestelltes Magnetfeld zwar vergrößert, jedoch nicht ausreichend, um die Verklinkung zu lösen. Jedoch erfolgt eine Erwärmung der Bimetallschnappscheibe des weiteren Auslösers 16. Diese nimmt zu, je länger der vergrößerte elektrische Strom geführt wird. Nach einer bestimmten Zeitspanne, die abhängig von der Höhe des geführten elektrischen Stroms ist, ist die Erwärmung so groß, dass eine Verformung der Bimetallschnappscheibe erfolgt. Folglich wird die Verklinkung des Schalters 12 freigegeben, und dieser wird aufgrund der wirkenden Kraft geöffnet. Somit wird die Bestromung der Last 8 unterbrochen.

Falls ein Kurzschluss bei der Last 8 vorliegt, steigt der über den Schutzschalter 10 geführte elektrische Strom schnell und stärker an und beträgt insbesondere mehr als das Fünffache des Nennstroms. In diesem Fall reicht das mittels der Auslösespule 18 bereitgestellte Magnetfeld aus, um die Verklinkung zu lösen, sodass der Stromfluss über den Schutzschalter 10 nach einer vergleichsweise kurzen Zeitspanne unterbrochen wird. Die bis dahin erfolgte Erwärmung der Bimetallschnappscheibe führt dahingegen noch zu keiner Verformung dieser. Aufgrund des Auslösers 14 sowie des weiteren Auslösers 16 ist somit eine Auslösekennlinie bereitgestellt, in Abhängigkeit derer der Schalter 12 betätigt ist.

Bei dem Gleichstromkreis 2 ist es möglich, dass lediglich bei einer der Lasten 8 ein Kurzschluss auftritt, die im Weiteren auch als defekte Last 8 bezeichnet wird. Aufgrund des Kurzschlusses ist eine niederohmige Verbindung vorhanden, wobei es möglich ist, dass zu der defekten Last nicht nur der mittels der Spannungsquelle 4 bereitgestellte elektrische Strom fließt, sondern auch ein mittels der noch funktionierenden Last 8, beispielsweise mittels eines Energiespeicher von dieser. Somit wird von der funktionierenden Last 8 über den zugeordneten Schutzschalter 10 ein vergleichsweise hoher elektrischer Strom in den Gleichstromzwischenkreis 6 zurückgeführt, zumindest bis der der defekten Last 8 zugeordnete Schutzschalter 10 auslöst und den Stromfluss zu der defekten Last 8 unterbricht.

Der (Rück-)Strom von der funktionierenden Last 8 fließt dabei nicht über den Auslöser 14 des zugeordneten Schutzschalters 10, sondern über die Diode 24, sodass trotz des vergleichsweisen großen Stroms der Schalter 12 nicht betätigt wird. Somit ist die funktionierenden Last 8, sobald die defekte Last 8 mittels des zugeordneten Schutzschalters 10 von dem Gleichstromzwischenkreis 6 abgetrennt ist, weiter einsatzbereit. Falls der (elektrische) Rückstrom jedoch über eine vergleichsweise große Zeitspanne vorhanden ist, erfolgt auch hier eine Erwärmung der Bimetallschnappscheibe, die zu einer Freigabe der Verklinkung führt, sodass auch dann der Schalter 12 betätigt wird. Folglich ist bei der anderen Stromrichtung über den Schutzschalter 10 die Auslösekennlinie verändert, und die Auslösekennlinie ist daher abhängig von der Richtung des über diesen geführten elektrischen Stroms. Zusammenfassend wird jeder der Schutzschalter 10 zur Absicherung jeweils einer der Lasten 8 im Gleichstromkreis 2 verwendet.

In Figur 3 ist eine Weiterbildung des in Figur 2 dargestellten Schutzschalters 10 dargestellt. Die Variante entspricht im Wesentlichen der vorhergehenden Ausgestaltung, wobei jedoch das stromrichtungsabhängige Bauteil 22 verändert ist. Dieses weist einen Halbleiterschalter 26 auf, mittels dessen der Auslöser 14 überbrückt ist. Ferner ist ein Operationsverstärker 28 vorhanden, der als Komparator verschaltet ist, und mittels dessen das Vorzeichen der über den Auslöser 14 anfallende elektrische Spannung bestimmt wird. Hierfür sind zudem auch nicht näher dargestellte weitere Bauteile vorhanden, wie beispielsweise Spannungsteiler. Mittels des Operationsverstärkers 28 ist der Halbleiterschalter 26 betätigt. Falls der elektrische Strom von dem Gleichspannungszwischenkreis 6 zur Last 8 fließt, ist der Halbleiterschalter 26 elektrisch sperrend, also geöffnet, wohingegen bei einem entgegengesetzten Stromfluss der Halbleiterschalter 26 in den elektrisch leitfähigen Zustand versetzt ist. Zusammenfassend ist der Halbleiterschalter 26 somit in Abhängigkeit der über den Auslöser 14 anfallenden elektrischen Spannung betätigt. Bei dieser Variante ist sichergestellt, dass auch bei einem vergleichsweise geringen Widerstand der Auslösespule 18 der elektrische Strom bei einem Stromfluss von der Last 8 zu dem Gleichspannungszwischenkreis 6 über das stromrichtungsabhängige Bauteil 20 geführt wird und nicht über den Auslöser 14.

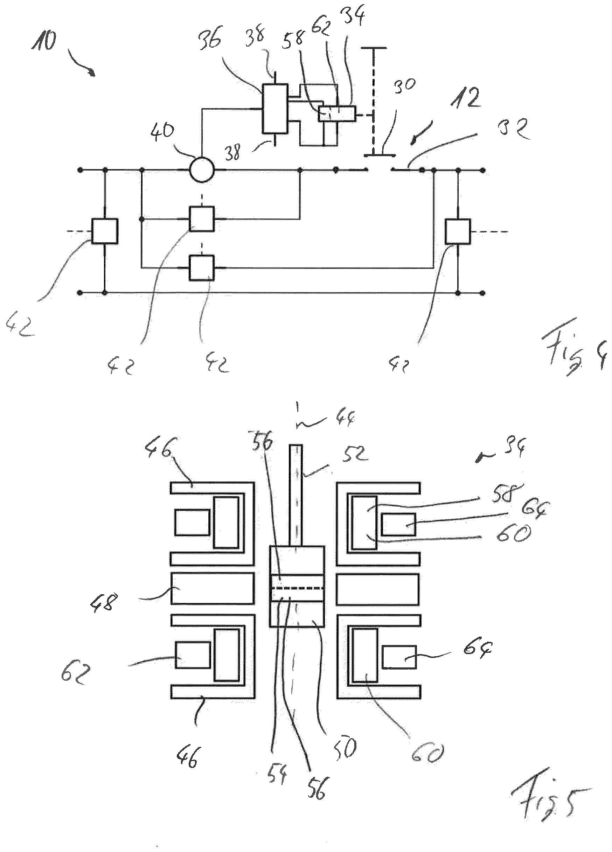

In Figur 4 ist ein vereinfachter Schaltplan einer alternativen Ausgestaltungsform des Schutzschalters 10 dargestellt. Der Schalter 12 ist als ein Doppelunterbrecher ausgestaltet und weist eine Kontaktbrücke 30 auf, die bezüglich einer eine Öffnung aufweisenden Stromschiene 32 beweglich gelagert ist. Hierbei ist es möglich, mittels der Kontaktbrücke 30 die Öffnung der Stromschiene 32 zu überbrücken, sodass über die Stromschiene 32 der elektrische Strom geführt werden kann. Mittels Beabstandens der Kontaktbrücke 30 von der Stromschiene 32 hingegen ist die Öffnung freigegeben, sodass ein Stromfluss über die Stromschiene 32 unterbunden ist.

Die Kontaktbrücke 30 des Schalter 12 ist mittels eines Antriebs 34 angetrieben, sodass bei Betrieb des Antriebs 34 die Kontaktbrücke 30 verstellt und somit der Schalter 12 geschlossen oder geöffnet wird. Folglich ist der Antrieb 34 in Wirkverbindung mit der Kontaktbrücke 30, nämlich mechanisch mit dieser gekoppelt, und der Antrieb 34 wirkt auf den Schalter 12. Die Bestromung des Antriebs 34 erfolgt mittels einer Steuereinheit 36, die hierfür elektrisch mit dem Antrieb 34 verbunden ist. Zur Bestromung der Steuereinheit 36, und folglich des Antriebs 34, weist die Steuereinheit 36 zwei Versorgungsanschlüsse 38 auf, die mit einer nicht näher dargestellten separaten Spannungsversorgung elektrisch kontaktiert sind, mittels derer eine Gleichspannung in Höhe von 12 V oder 24 V bereitgestellt wird.

Die Steuereinheit 36 weist beispielsweise einen Energiespeicher in Form eines Kondensators auf, der mittels der Spannungsversorgung geladen wird, und der elektrisch parallel zu einem Mikrocontroller der Steuereinheit 36 geschaltet ist. Somit werden mittels des Energiespeichers etwaige Schwankungen der elektrischen Spannung und/oder des elektrischen Stroms der Spannungsversorgung abgefangen, sodass eine Beschädigung des Mikrocontrollers hierdurch vermieden ist. Auch ist es aufgrund des Energiespeichers möglich, bei einem Ausfall der Spannungsversorgung zumindest einmal den Antrieb 34 zu betätigen und auf diese Weise den Schalter 23 zu öffnen. In einer näher dargestellten Variante weist die Steuereinheit 36 zudem eine Ladungspumpe auf, mittels derer es ermöglicht ist, die an dem Kondensator anliegende elektrische Spannung im Vergleich zu der mittels der Spannungsversorgung bereitgestellten elektrischen Spannung zu erhöhen, sodass die mittels des Energiespeichers gespeicherte Energiemenge vergrö-βert ist. Somit ist stets ein sicherer Betrieb des Antriebs 34 möglich, auch wenn ein vollständiger Ausfall der Spannungsversorgung vorliegt oder der Antrieb 34 geringfügig blockiert ist.

Mittels des Mikrocontrollers wird dabei die Bestromung des Antriebs 34 eingestellt, und der Mikrocontroller ist mit einem Stromsensor 40 signaltechnisch verbunden, der elektrisch in Reihe mit dem Schalter 12 geschaltet ist. Der Stromsensor 40 ist als Shunt gestaltet. Somit ist mittels des Stromsensors 40 ein Messen des mittels des Schalters 12 geführten elektrischen Stroms ermöglicht. Ferner weist der Schutzschalter 10 mehrere Spannungssensoren 42 auf, wobei mittels eines davon die über den Stromsensor 40 anfallende elektrische Spannung und mittels eines anderen davon zusätzlich die über den Schalter 12 anfallende Spannung gemessen werden kann. Mittels der anderen beiden kann jeweils die elektrische Spannung auf beiden Seiten des Schalters 12 gegen den anderen Pol des Gleichstromzwischenkreises 6 gemessen werden. Sämtliche Spannungssensoren 42 sind hierbei signaltechnisch mit der Steuereinheit 36 verbunden.

Bei Betrieb wird mittels des Mikrocontrollers der Steuereinheit 36 die zeitliche Änderung der mittels der Spannungssensoren 42 gemessenen elektrischen Spannungen sowie des mittels des Stromsensors 40 gemessenen elektrischen Stroms überprüft. Wenn die zeitliche Änderung des gemessenen Stroms einem Anstieg entspricht und einen bestimmten Grenzwert überschreitet, wird mittels der Steuereinheit 36 der Antrieb 34 angesteuert, sodass der Schalter 12 geöffnet wird. Der Grenzwert ist derart gewählt, dass dieser lediglich in einem Fehlerfall, nämlich bei einem elektrischen Kurzschluss der Last 8, überschritten wird. Ebenso erfolgt das Betätigen des mechanischen Schalter 26 mittels der Steuereinheit 40, wenn anhand der mittels der Spannungssensoren 42 erfassten elektrischen Spannung auf einen Fehlerfall geschlossen wird, also wenn die elektrische Spannung einen bestimmten Grenzwert erreicht. Die Grenzwerte sind dabei für die beiden Richtungen des Stromflusses unterschiedlich, sodass auch hier die Auslösekennlinie abhängig von der Richtung des geführten elektrischen Stroms ist.

In Figur 5 ist in einer Schnittdarstellung entlang einer Achse 44 der Antrieb 34 schematisch dargestellt. Der Antrieb 34 ist als "Moving Magnet Aktuator" ausgestaltet und weist somit zwei konzentrisch zu der Achse 44 und entlang dieser beabstandet angeordnete scheibenspulen- oder trommelartige Halter 46 auf, die aus einem ferromagnetischen Material erstellt sind. Zwischen diesen ist ein ringförmiges Kurzschlussblech 48 konzentrisch zu der Achse 44 positioniert, das ebenfalls aus einem ferromagnetischen Material erstellt ist. Mittels der Halter 46 und des Kurzschlussblechs 48 ist somit ein Hohlzylinder gebildet, innerhalb dessen ein weiterer Halter 50 aus einem Kunststoff angeordnet und mittels einer nicht näher dargestellten Führung entlang der Achse 44 verschieblich gelagert ist. An dem Halter 50 ist ein sich entlang der Achse 44 erstreckender Stab 52 befestigt, der an der Kontaktbrücke 30 befestigt ist, entweder direkt oder über eine nicht näher dargestellte Mechanik. In den zylinderartigen weiteren Halter 50 ist ein zylinderförmiger Permanentmagnet 54 eingebettet, der zwei magnetische Pole 56 aufweist, von denen jeder jeweils eines der Enden des Permanentmagneten 54 in einer Richtung parallel zur Achse 44 bildet.

Ferner weist der Antrieb 34 eine Antriebseinheit 58 auf, die zwei elektrische Spulen 60 umfasst. Jede der elektrischen Spulen 60, die zueinander baugleich sind, ist auf jeweils einen der Halter 46 gewickelt, und diese sind zueinander elektrisch parallel geschaltet. Der Antrieb 34 weist eine weitere Antriebseinheit 62 auf, die zwei weitere elektrische Spulen 64 umfasst, von denen eine auf eine der elektrischen Spulen 60 und die andere auf die verbleibende elektrische Spulen 60 gewickelt ist. Auch die beiden weiteren elektrischen Spulen 64 sind zueinander elektrisch parallel geschaltet. Die beiden Antriebseinheiten 58, 62 sind zumindest einseitig separat mit der Steuereinheit 36 elektrisch kontaktiert, sodass es möglich ist, mittels der Steuereinheit 36 die beiden Antriebseinheiten 58, 62 separat zu bestromen.

Wenn die Antriebseinheiten 58, 62 nicht bestromt werden, wird aufgrund der magnetischen Wechselwirkung mit dem Kurzschlussblech 48 sowie den Haltern 46 der Permanentmagnet 54 in eine Position im Wesentlichen innerhalb des Kurzschlussblechs 48 gezogen, wobei auf den Permanentmagneten 48 und somit auch auf den weiteren Halter 50 eine Kraft von ca. 30 N wirkt. Mit dieser Kraft wird somit auch die Kurzschlussbrücke 30 in der gewünschten Position gehalten, nämlich in der, bei der der Schalter 12 geschlossen ist.

Entsprechend der jeweils verwendeten Auslösekennlinie werden mittels der Steuereinheit 36 die beiden Antriebseinheiten 58, 62 bestromt, sodass der Permanentmagnet 54 von einem der Halter 46 aufgrund der zusätzlich erstellten Magnetfelder entlang der Achse 44 weggedrückt und zu dem verbleibenden Halter 46 gezogen wird. Somit wirken vergleichsweise große Kräfte auf den Permanentmagneten 54 und folglich über den weiteren Halter 50 und den Stab 52 auch auf die Kontaktbrücke 30, sodass der Schalter 12 vergleichsweise schnell geöffnet wird.

Falls der Fehlerfall nicht vorliegt, und beispielsweise aufgrund eines aktuellen Betriebszyklus die Bestromung der Last 8 unterbrochen werden soll, wird mittels der Steuereinheit 36 lediglich eine der Antriebseinheiten 58, 62 bestromt, sodass der Schalter 12 vergleichsweise langsam geöffnet wird. Infolgedessen ist eine elektrische und auch eine mechanische Belastung des Schutzschalters 10 reduziert.

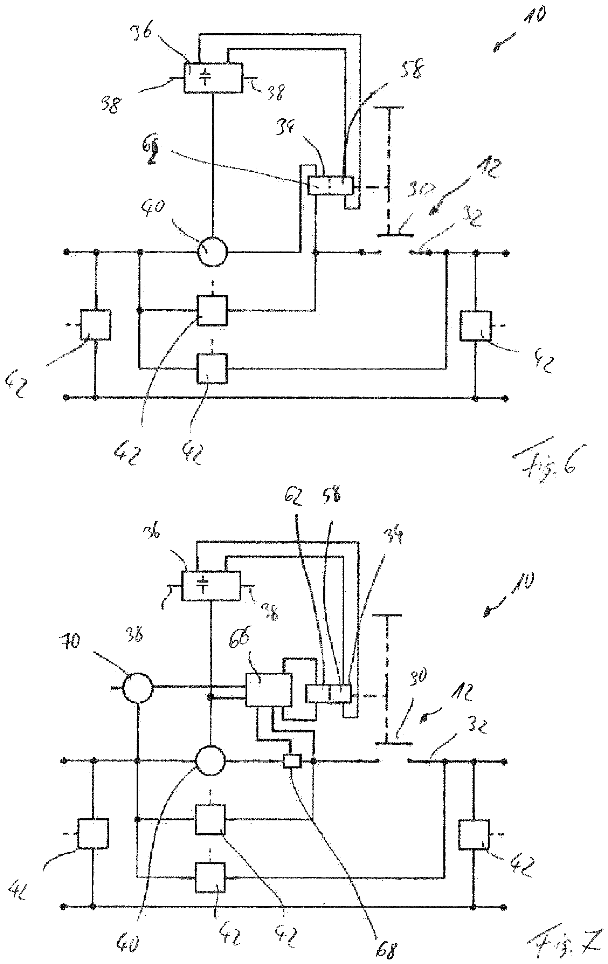

In Figur 6 ist eine Abwandlung des in Figur 4 dargestellten Schutzschalters 10 gezeigt. Bei dieser Variante ist der Aufbau des Antrieb 34 im Wesentlichen unverändert belassen. Auch ist der Schalter 12 nicht verändert, und der Stromsensor 40 sowie der Spannungssensor 42 sind weiterhin vorhanden. Zudem ist auch weiterhin die Steuereinheit 36 vorhanden. Mittels dieser kann jedoch lediglich eine Bestromung der Antriebseinheit 58 des Antriebs 34 erfolgen. Die weitere Antriebseinheit 62 ist elektrisch in Reihe mit dem Schalter 12 geschaltet und befindet sich zwischen diesem und dem Stromsensor 40. Somit wird, wenn der Schalter 12 geschlossen ist, die weitere Antriebseinheit 62 im Wesentlichen kontinuierlich bestromt, deswegen mittels der weiteren elektrischen Spulen 64 im Wesentlichen kontinuierlich das Magnetfeld erstellt wird. Die weiteren elektrischen Spulen 64 sind dabei derart ausgebildet, dass das Magnetfeld nicht ausreicht, um den Permanentmagneten 54 zu bewegen. Dies erfolgt erst, wenn der elektrische Strom zumindest das Drei- oder Fünffache des Nennstroms beträgt, und zwar vom dem Gleichspannungszwischenkreis 6 zu der Last 8. Wenn der elektrische Strom in die entgegengesetzte Richtung fließt, weist das mittels der weiteren Antriebseinheit 62 erstellte Magnetfeld eine umgekehrte Polarität auf, weswegen die Kontaktbrücke 30 in die geschlossene Position gedrückt wird, zumindest solange bis mittels der Antriebseinheit 58 dieses Magnetfeld überkompensiert wird.

In Figur 7 ist eine weitere Ausgestaltung des Schutzschalters 10 dargestellt. Es sind wiederum der Stromsensor 40 sowie die Spannungssensoren 42 vorhanden, die entsprechend der vorhergehenden Ausgestaltungsform angeordnet bezüglich des Schalters 12 sind, der ebenfalls nicht verändert ist. Auch ist weiterhin die Steuereinheit 36 vorhanden, die die beiden Versorgungsanschlüsse 38 aufweist. Mittels der Steuereinheit 36 ist wiederum die Antriebseinheit 58 des Antriebs 34 bestromt, der nicht abgewandelt ist. Zusätzlich ist hierbei der Steuereinheit 36 eine Untereinheit 66 zugeordnet, die als separate Baueinheit ausgestaltet sein kann, wie in dem dargestellten Beispiel gezeigt, oder in die sonstigen Bestandteile der Steuereinheit 36 integriert ist. Mittels der Untereinheit 66 erfolgt dabei eine Bestromung der weiteren Antriebseinheit 62.

Zwischen den Stromsensor 40 und den Schalter 12 ist ein Element 68 geschaltet, das einen regelbaren Widerstand aufweist, und das mittels der Untereinheit 66 eingestellt wird. Die Reihenschaltung aus dem Element 68 und dem Stromsensor 40 ist mit einer Reihenschaltung aus weiteren Stromsensor 70 und der Untereinheit 66 überbrückt.

Falls kein Fehlerfall vorliegt, ist das Element 68 derart eingestellt, dass der bereitgestellte Widerstand minimal ist. Infolgedessen fließt der elektrische Strom über den Stromsensor 40 und das Element 68. Falls hingegen ein Fehlerfall vorliegt oder zumindest der Schutzschalter 10 ausgelöst werden soll, wird der Widerstand des Elements 68 erhöht. Infolgedessen fließt der elektrische Strom nicht mehr über das Element 68 sowie den Stromsensor 40, sondern über die Untereinheit 66, mittels derer die weitere Antriebseinheit 62 bestromt wird. Infolgedessen wird der Schalter 12 geöffnet. Hierbei erfolgt zudem auch eine Bestromung der Antriebseinheit 58 mittels der Spannungsversorgung. Die Auslösekennlinie, in Abhängigkeit derer der Schalter 12 betätigt wird, ist wiederum abhängig von der Richtung des elektrischen Stroms.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Gleichstromkreis
- 4: Gleichspannungsquelle
- 6: Gleichspannungszwischenkreis
- 8: Last
- 10: Schutzschalter
- 12: Schalter
- 14: Auslöser
- 16: weiterer Auslöser
- 18: Auslösespule
- 20: Schaltschloss
- 22: stromrichtungsabhängiges Bauteil
- 24: Diode
- 26: Halbleiterschalter
- 28: Operationsverstärker
- 30: Kontaktbrücke
- 32: Stromschiene
- 34: Antrieb
- 36: Steuereinheit
- 38: Versorgungsanschluss
- 40: Stromsensor
- 42: Spannungssensoren
- 44: Achse
- 46: Halter
- 48: Kurzschlussblech
- 50: weiterer Halter
- 52: Stab
- 54: Permanentmagnet
- 56: Pol
- 58: Antriebseinheit
- 60: elektrische Spule
- 62: weitere Antriebseinheit
- 64: weitere elektrische Spule
- 66: Untereinheit
- 68: Element
- 70: weiterer Stromsensor

## Patentansprüche

1. Schutzschalter (10) mit einem Schalter (12), der in Abhängigkeit einer Auslösekennlinie betätigt ist, wobei die Auslösekennlinie abhängig von einer Richtung eines geführten elektrischen Stroms ist.

2. Schutzschalter (10) nach Anspruch 1,
**gekennzeichnet durch**
einen mit dem Schalter (12) in Reihe geschalteten Auslöser (14), der mittels eines stromrichtungsabhängigen Bauteils (22) überbrückt ist.

3. Schutzschalter (10) nach Anspruch 2,
**dadurch gekennzeichnet,**
**dass** der Auslöser (14) eine elektrische Auslösespule (18) aufweist, die elektrisch in Reihe mit dem Schalter (12) geschaltet ist.

4. Schutzschalter (10) nach Anspruch 2 oder 3,
**dadurch gekennzeichnet,**
**dass** elektrisch in Reihe mit dem Schalter (12) ein weiterer Auslöser (16) geschaltet ist.

5. Schutzschalter (10) nach einem der Ansprüche 2 bis 4,
**dadurch gekennzeichnet,**
**dass** das stromrichtungsabhängige Bauteil (22) eine Diode (24) umfasst.

6. Schutzschalter (10) nach einem der Ansprüche 2 bis 5,
**dadurch gekennzeichnet,**
**dass** das stromrichtungsabhängige Bauteil (22) einen Halbleiterschalter (26) aufweist, der in Abhängigkeit einer über den Auslöser (14) anfallenden elektrischen Spannung betätigt ist.

7. Schutzschalter (10) nach Anspruch 1,
**gekennzeichnet durch**
einen auf den Schalter (12) wirkenden Antrieb (34), der mittels einer Steuereinheit (36) in Abhängigkeit der Richtung betätigt ist.

8. Verwendung eines Schutzschalters (10) nach einem der Ansprüche 1 bis 7 zur Absicherung einer Last (8) in einem Gleichstromkreis (2).
